# FASCICULE DE BREVET EUROPEEN

(11) **EP 1 084 764 B1**
(45) Date de publication et mention de la délivrance du brevet: **13.09.2006**
(21) Numéro de dépôt: 00402556.5
(22) Date de dépôt: 15.09.2000
(51) Int. Cl.: B05B 11/00, A47K 5/12, G01F 11/02

(54) **Dispositif de distribution destiné à équiper un récipient**
Abgabevorrichtung für einen Behälter
Dispensing device for a container

(30) Priorité: 16.09.1999 FR 9911581
(43) Date de publication de la demande: 21.03.2001
(73) Titulaire: L'ORÉAL, 75008 Paris (FR)
(72) Inventeur: Bonningue, Philippe, 75020 Paris (FR)
(74) Mandataire: Tanty, François

(56) Documents cités:
- EP-A- 0 011 487
- EP-A- 0 312 474
- GB-A- 749 691
- US-A- 5 024 355

## Description

La présente invention concerne un dispositif de distribution destiné à équiper un récipient, notamment un récipient contenant un produit cosmétique, comportant une partie de base et un ensemble mobile par rapport à cette partie de base, définissant avec celle-ci une chambre de pompage de volume variable.

On connaît par la demande de brevet européen EP-A-0 011 487 un dispositif de ce type dans lequel l'ensemble mobile comporte un piston mobile entre deux positions extrêmes et un organe de commande, cet organe de commande étant solidaire du piston et traversant la partie de base et étant pourvu d'un passage de sortie permettant la distribution du produit contenu dans la chambre de pompage, le piston comportant au moins un passage d'amenée permettant le remplissage de la chambre de pompage, l'organe de commande étant mobile par rapport au piston entre une position de distribution et une position de remplissage, le piston comportant des moyens d'obturation du passage de sortie, propres à obturer ce dernier lorsque l'organe de commande est dans sa position de remplissage et/ou l'organe de commande comportant des moyens d'obturation du passage d'amenée, propres à obturer ce dernier lorsque l'organe de commande est dans sa position de distribution, l'organe de commande comportant un premier moyen d'entraînement agencé pour coopérer avec le piston lorsque l'organe de commande est dans sa position de distribution afin de l'entraîner en déplacement dans un sens correspondant à une diminution du volume de la chambre de pompage, l'organe de commande comportant un second moyen d'entraînement agencé pour coopérer avec le piston lorsque l'organe de commande est dans sa position de remplissage, afin de l'entraîner en déplacement dans un sens correspondant à une augmentation du volume de la chambre de pompage.

Dans ce dispositif connu, le piston coulisse avec une friction importante par rapport à la partie de base, ce qui tend à provoquer une usure rapide et rend l'actionnement du dispositif relativement difficile.

L'invention vise à améliorer encore un dispositif du type défini plus haut.

Elle y parvient grâce au fait que la partie de base est conformée pour créer une friction entre le piston et la partie de base lorsque le volume de la chambre de pompage est minimum, et une absence de friction ou une friction moindre lorsque le piston est dans une position intermédiaire entre ses positions extrêmes.

Grâce à l'invention, le frottement est suffisant entre le piston et la partie de base à la fin de la distribution d'une dose de produit pour que l'organe de commande puisse se déplacer relativement au piston et gagner la position de remplissage.

De plus, le piston peut se déplacer sans frotter sur la partie de base ou avec un frottement moindre durant le remplissage de la chambre de pompage, ce qui diminue l'usure des composants et facilite la manipulation de l'organe de commande.

Dans une mise en oeuvre préférée de l'invention, la partie de base est conformée pour créer une friction entre le piston et la partie de base lorsque le volume de la chambre de pompage est maximum et une absence de friction entre le piston et la partie de base lorsque le piston est dans une position intermédiaire entre ses positions extrêmes.

Dans une réalisation préférée, la partie de base comporte au moins une première portion d'un diamètre intérieur inférieur ou égal au diamètre extérieur du piston et une deuxième portion d'un diamètre supérieur à celui du piston, la première portion venant au contact du piston lorsque le volume de la chambre de pompage est minimum.

Dans une réalisation particulière, la partie de base comporte une troisième portion d'un diamètre inférieur ou égal à celui du piston, et venant au contact du piston lorsque le volume de la chambre de pompage est maximum.

Toujours dans une réalisation particulière, la dimension axiale des première et troisième portions de la partie de base est inférieure ou égale à deux fois la dimension axiale du piston.

Ainsi, la majeure partie du déplacement du piston peut se faire sans frottement du piston avec la partie de base.

Le dispositif de distribution selon l'invention présente un nombre réduit de pièces, peu coûteux à fabriquer et présente un fonctionnement fiable.

Avantageusement, le piston comporte des moyens d'obturation du passage de sortie propres à obturer ce dernier lorsque l'organe de commande est dans sa position de remplissage et l'organe de commande comporte des moyens d'obturation du passage d'amenée propres à obturer ce dernier lorsque l'organe de commande est dans sa position de distribution.

En variante, le piston comporte des moyens d'obturation du passage de sortie propres à obturer ce dernier lorsque l'organe de commande est dans sa position de remplissage, et des moyens d'obturation du passage d'amenée.

En variante encore, l'organe de commande comporte des moyens d'obturation du passage d'amenée propres à obturer ce dernier lorsque l'organe de commande est dans sa position de distribution, et des moyens d'obturation du passage de sortie.

Dans une réalisation particulière, les moyens d'obturation du passage d'amenée jouent le rôle du premier moyen d'entraînement.

Dans une réalisation particulière, le piston est constitué par un disque pourvu d'une lumière centrale pour le passage de l'organe de commande et d'orifices de remplissage répartis autour de cette lumière centrale, ces orifices de remplissage constituant le passage d'amenée.

Dans une réalisation particulière, l'organe de commande comporte une tige de commande s'étendant à une extrémité hors de la partie de base, pourvue à cette extrémité d'un élément de préhension et d'un orifice de sortie du produit.

Dans une réalisation particulière, la tige de commande comporte à son extrémité opposée, après traversée du piston, un plateau propre à obturer le passage d'amenée du piston lorsque l'organe de commande est dans sa position de distribution.

Dans une réalisation particulière, le plateau comporte des ouvertures favorisant la circulation du produit vers le passage d'amenée du piston.

Dans une réalisation particulière, le second moyen d'entraînement est constitué par une butée réalisée sur la tige de commande.

Dans une réalisation particulière, le passage de sortie débouche par un orifice radial sur la tige de commande entre les premier et second moyens d'entraînement et le moyen d'obturation du passage de sortie est constitué par une surface cylindrique de la lumière centrale du piston, ladite surface cylindrique ayant une hauteur inférieure à la distance séparant ledit orifice radial et le premier moyen d'entraînement et une hauteur supérieure à la distance séparant ledit orifice radial et le second moyen d'entraînement.

Dans une réalisation particulière, la partie de base est conformée pour augmenter le frottement du piston sur la partie de base lorsque le volume de la chambre de pompage est minimum ou maximum.

Dans une réalisation particulière, la partie de base est agencée pour se fixer sur le col du récipient.

L'invention a encore pour objet un récipient équipé d'un dispositif de distribution tel que défini plus haut.

L'invention a encore pour objet l'utilisation d'un récipient tel que précité, tête en bas.

L'invention sera mieux comprise à la lecture de la description détaillée qui va suivre, d'un exemple de mise en oeuvre non limitatif, et à l'examen du dessin annexé, sur lequel :
- La figure 1 est une vue schématique en coupe axiale d'un dispositif de distribution conforme à l'invention,
- la figure 2 est une section de la partie de base et du piston selon le trait de coupe II-II de la figure 1,
- les figures 3 à 6 illustrent le fonctionnement du dispositif,
- la figure 7 est une vue selon la flèche VII de la figure 1, représentant isolément le plateau de l'ensemble mobile,
- la figure 8 est une coupe analogue à la figure 1, illustrant une première variante de réalisation, et
- la figure 9 est une coupe analogue à la figure 1, illustrant une deuxième variante de réalisation.

Le dispositif de distribution ou pompe 10 représenté sur les figures comporte une partie de base 11 solidaire d'un récipient 12 et un ensemble mobile 13, déplaçable par rapport à la partie de base 11, comme cela sera précisé plus loin.

La partie de base 11 comporte une jupe tubulaire 14 d'axe X, fermée à son extrémité inférieure par une paroi de fond 15, cette paroi de fond 15 étant prolongée radialement à l'extérieur de la jupe tubulaire 14 par un rebord annulaire 16 conformé pour s'encliqueter sur le col 17 du récipient 12.

Dans l'exemple de réalisation décrit, le récipient 12 est destiné à être utilisé tête en bas.

La jupe tubulaire 14 ferme de manière étanche le col 17 du récipient.

L'ensemble mobile 13 comporte un piston 20 et un organe de commande 40.

Le piston 20 se présente dans l'exemple de réalisation décrit sous la forme d'un disque de diamètre extérieur proche du diamètre intérieur de la jupe tubulaire 14, traversé en son centre par une lumière centrale 21.

Le piston 20 est également traversé par des orifices de remplissage 22 répartis autour de cette lumière centrale 21.

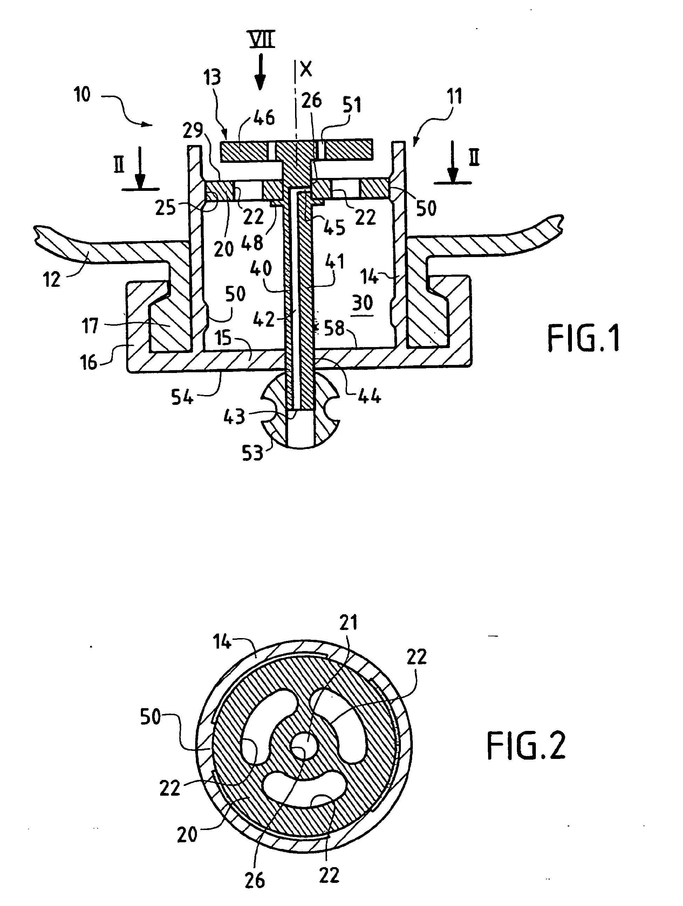

Les orifices de remplissage 22 présentent une section réniforme, comme on peut le voir sur la figure 2.

Le piston 20 définit à l'intérieur de la jupe tubulaire 14, avec la paroi de fond 15, une chambre de pompage 30 dont le volume dépend du positionnement axial du piston 20 relativement à la partie de base 11.

L'organe de commande 40 comporte une tige de commande 41 d'axe X, pourvue intérieurement d'un canal 42.

La tige de commande 41 traverse la paroi de fond 15 à la faveur d'une ouverture 44 et traverse la lumière centrale 21 du piston 20.

Le canal 42 débouche d'une part à l'extrémité inférieure de la tige de commande 41 par un orifice axial 43 et d'autre part à une certaine distance de l'extrémité supérieure de la tige de commande 41 par un orifice radial 45.

La tige de commande 41 est solidaire à son extrémité supérieure d'un plateau 46.

Ce plateau 46 s'étend perpendiculairement à l'axe X.

Le diamètre extérieur du plateau 46 est choisi de manière à lui permettre de recouvrir les orifices de remplissage 22, comme cela sera expliqué plus loin.

La tige de commande 41 comporte une butée 48 située sous l'orifice radial 45.

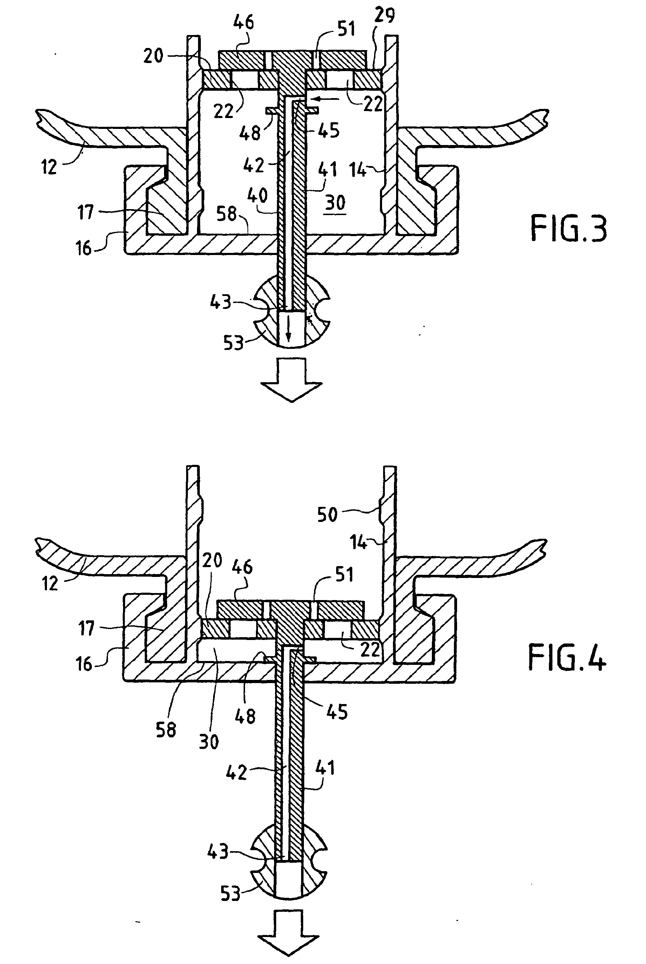

L'écartement entre l'orifice radial 45 et le plateau 46 est supérieur à l'épaisseur du piston 20, de sorte que la tige de commande 41 peut se déplacer relativement au piston 20 entre une position de remplissage représentée sur la figure 1, dans laquelle le piston 20 est en appui sur la butée 48 par sa face inférieure 25 et obture avec la surface cylindrique 26 de la lumière centrale 21 l'orifice radial 45, et une position de distribution représentée sur la figure 3, dans laquelle le piston 20 est en appui par sa face supérieure 29 contre le plateau 46.

L'écartement entre la butée 48 et le plateau 46 est supérieur à l'épaisseur du piston 20 et choisi de telle sorte que lorsque le piston 20 repose contre le plateau 46, l'orifice radial 45 est dégagé, comme on peut le voir sur la figure 3.

La jupe tubulaire 14 comporte sur sa surface intérieure de légers reliefs 50 destinés à accroître le frottement du piston 20 sur la jupe tubulaire 14 lorsque le piston 20 est dans la position de la figure 1 correspondant à un volume de la chambre de pompage maximum ou quand le piston est dans la position de la figure 4 correspondant à un volume de la chambre de pompage 30 minimum.

Le plateau 46 comporte des ouvertures 51 décalées par rapport aux orifices de remplissage 22, destinées à favoriser la circulation du produit contenu dans le récipient 12 vers les orifices de remplissage 22 lorsque la chambre de pompage 30 est en cours de remplissage.

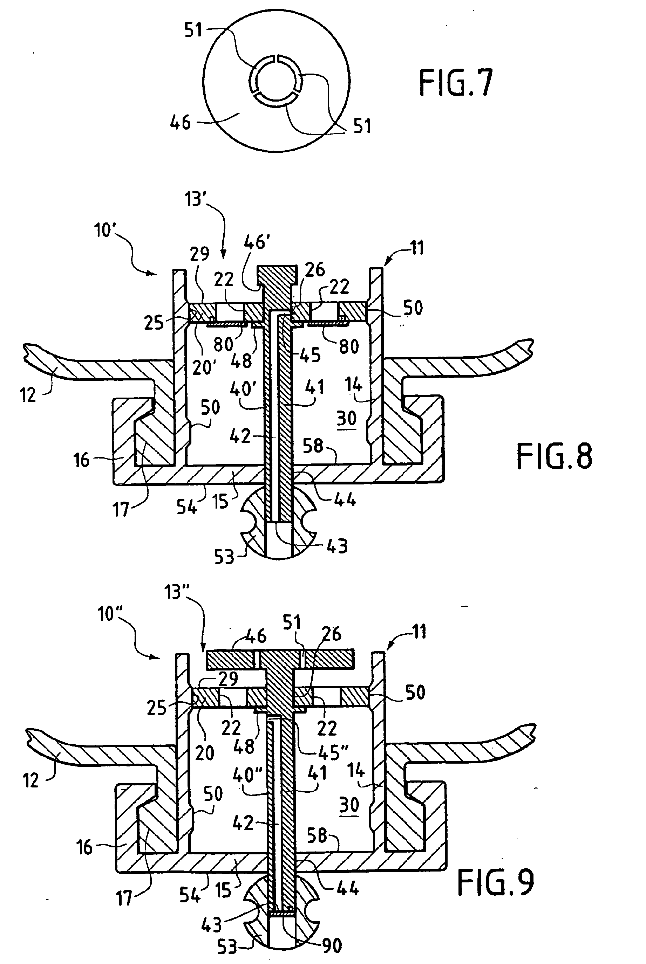

Les orifices 51 sont réniformes, comme on peut le voir sur la figure 7.

La tige de commande 41 est solidaire à son extrémité inférieure d'un embout de distribution 53 constituant également un organe de préhension.

La venue en appui de cet embout 53 sur la surface inférieure 54 de la paroi de fond 15 limite la course en déplacement vers le haut de la tige de commande 41.

Le fonctionnement du dispositif de distribution est le suivant.

On suppose la chambre de pompage 30 remplie de produit, et le piston 20 en position haute.

Pour distribuer du produit, l'utilisateur tire sur l'embout de distribution 53, ce qui entraîne en déplacement vers le bas la tige de commande 41.

Le frottement du piston 20 sur la jupe tubulaire 14 étant supérieur au frottement de la tige 41 à travers le piston 20, la tige de commande 41 commence par se déplacer relativement au piston 20, sans que ce dernier ne bouge, jusqu'à ce que le plateau 46 vienne en appui sur la face supérieure 29 du piston 20, comme illustré sur la figure 3.

A partir de ce moment, l'orifice radial 45 de la tige de commande 41 est libéré et les orifices de remplissage 22 du piston 20 sont obturés par le plateau 46.

Lorsque l'utilisateur continue à tirer sur l'embout de distribution 53, la tige de commande 41 entraîne en déplacement vers le bas le piston 20.

Le volume de la chambre de pompage 30 diminue et le produit s'écoule par le canal 42 vers l'orifice de sortie 43.

Le jeu existant entre le piston 20 et la jupe tubulaire 14 est suffisamment faible pour que le produit contenu dans la chambre de pompage 30 s'écoule préférentiellement par le canal 42 plutôt que par ce jeu.

Le mouvement de descente de la tige de commande 41 et du piston 20 se poursuit jusqu'à ce que la butée 48 vienne en appui sur la face supérieure 58 de la paroi de fond 15, comme illustré sur la figure 4.

Dans cette position, le volume de la chambre de pompage 30 est minimum.

Ensuite, pour remplir à nouveau la chambre de pompage 30, l'utilisateur pousse sur l'embout de distribution 53.

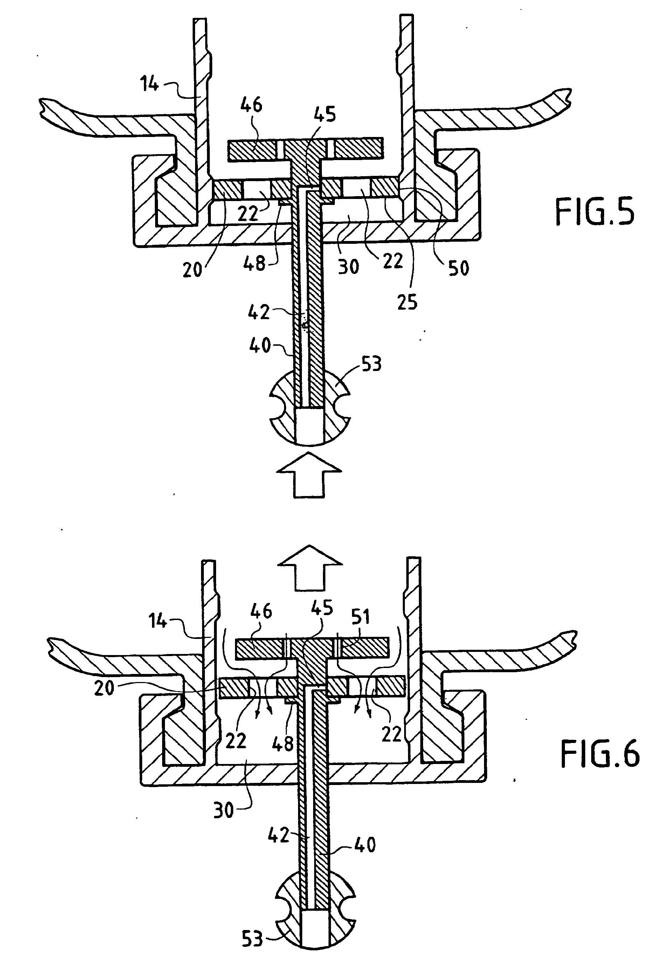

Le frottement entre le piston 20 et la jupe tubulaire 14 étant supérieur au frottement entre le piston 20 et la tige de commande 41, cette dernière commence par se déplacer relativement au piston 20 jusqu'à ce que la butée 48 vienne en appui sur la face inférieure 25 du piston 20, comme illustré sur la figure 5.

Lorsque la butée 48 est en appui sur le piston 20, la surface cylindrique 26 de la lumière centrale 21 du piston obture l'orifice radial 45 et le plateau 46 a libéré les orifices de remplissage 22, comme on peut le voir sur la figure 5.

Lorsque la remontée de la tige de commande 41 se poursuit, la butée 48 entraîne en déplacement vers le haut le piston 20.

Le volume de la chambre de pompage 30 augmente et il se crée une dépression dans celle-ci, provoquant l'arrivée de produit en provenance du récipient, par les ouvertures 51 et les orifices de remplissage 22, comme illustré sur la figure 6.

Bien entendu, l'invention n'est pas limitée à l'exemple de réalisation qui vient d'être décrit.

On peut notamment modifier la forme du piston et celle de l'organe de commande en fonction de la nature du produit et de la dose à distribuer.

On peut encore disposer un ressort hélicoïdal de rappel entre la butée 48 et la face supérieure 58 de la paroi de fond 15.

Dans l'exemple de réalisation des figures 1 à 7, le mouvement relatif de l'organe de commande et du piston est mis à profit pour soit obturer l'orifice radial 45, soit obturer les orifices de remplissage 22.

On peut, sans sortir du cadre de l'invention, exploiter le mouvement relatif de l'organe de commande et du piston pour n'effectuer qu'une seule de ces deux fonctions.

A titre d'exemple, on a représenté sur la figure 8 une première variante 10' dans laquelle l'ensemble mobile 13' comporte un organe de commande 40' qui diffère de l'organe de commande 40 précédemment décrit par l'absence du plateau 46, remplacé par un simple épaulement 46' et un piston 20' qui diffère du piston 20 précédemment décrit par la présence de clapets 80 associés aux orifices de remplissage 22 du côté inférieur.

Lors du remplissage de la chambre de pompage 30, les clapets 80 s'ouvrent.

Lorsque l'utilisateur tire sur l'organe de commande 40', l'épaulement 46' vient en appui sur le piston 20' et entraîne ce dernier vers le bas.

Les clapets 80 se ferment alors pour obturer les orifices de remplissage 22.

L'orifice radial 45 se trouve dégagé pour permettre la distribution du produit.

On a représenté sur la figure 9 une deuxième variante 10" dans laquelle l'ensemble mobile 13" diffère de l'ensemble mobile 13 par le fait que le passage de sortie de l'organe de commande 40" comporte un orifice radial 45" débouchant dans la chambre de pompage 30 en deçà de la butée 48 et par le fait qu'un clapet 90 est associé à l'orifice de sortie 43.

Lorsque l'utilisateur pousse l'organe de commande 40" vers le haut, le clapet 90 est fermé.

Ce dernier s'ouvre lorsque l'utilisateur tire sur l'organe de commande 40" pour distribuer le produit contenu dans la chambre de pompage 30.

Les clapets 80 et 90 des deux variantes qui viennent d'être décrites sont avantageusement réalisés par surmoulage ou bi-injection dans un matériau élastomère.

## Revendications

1. Dispositif de distribution (10 ; 10' ; 10") destiné à équiper un récipient (12), notamment un récipient contenant un produit cosmétique, comportant une partie de base (11) et un ensemble (13 ; 13' ; 13") mobile par rapport à cette partie de base et définissant avec celle-ci une chambre de pompage (30) de volume variable, l'ensemble mobile (13 ; 13' ; 13") comportant un piston (20 ; 20') mobile entre deux positions extrêmes et un organe de commande (40 ; 40' ; 40"), cet organe de commande étant solidaire du piston et traversant la partie fixe et étant pourvu d'au moins un passage de sortie (42) permettant la distribution du produit contenu dans la chambre de pompage, le piston comportant au moins un passage d'amenée (22) permettant le remplissage de la chambre de pompage, l'organe de commande (40 ; 40' ; 40") étant mobile par rapport au piston (20) entre une position de distribution et une position de remplissage, le piston comportant des moyens d'obturation (26) du passage de sortie (42) propres à obturer ce dernier lorsque l'organe de commande est dans sa position de remplissage et/ou l'organe de commande (40) comportant des moyens d'obturation (46) du passage d'amenée (22) propres à obturer ce dernier lorsque l'organe de commande est dans sa position de distribution, l'organe de commande comportant un premier moyen d'entraînement (46 ; 46') agencé pour coopérer avec le piston lorsque l'organe de commande est dans sa position de distribution, afin de l'entraîner en déplacement dans un sens correspondant à une diminution du volume de la chambre de pompage, l'organe de commande comportant un second moyen d'entraînement (48) agencé pour coopérer avec le piston lorsque l'organe de commande est dans sa position de remplissage, afin de l'entraîner en déplacement dans un sens correspondant à une augmentation du volume de la chambre de pompage, **caractérisé par le fait que** la partie de base (11) est conformée pour créer une friction entre le piston et la partie de base lorsque le volume de la chambre de pompage est minimum, et une absence de friction ou une friction moindre lorsque le piston est dans une position intermédiaire entre ses positions extrêmes.

2. Dispositif selon la revendication 1, **caractérisé par le fait que** la partie de base (11) est conformée pour créer une friction entre le piston (20) et la partie de base (11) lorsque le volume de la chambre de pompage (30) est maximum et une absence de friction entre le piston et la partie de base lorsque le piston est dans une position intermédiaire entre ses positions extrêmes.

3. Dispositif selon l'une des revendications 1 et 2, **caractérisé par le fait que** la partie de base (11) comporte au moins une première portion (50) d'un diamètre intérieur inférieur ou égal au diamètre extérieur du piston (20) et une deuxième portion d'un diamètre supérieur à celui du piston, la première portion venant au contact du piston lorsque le volume de la chambre de pompage (30) est minimum.

4. Dispositif selon la revendication 3, **caractérisé par le fait que** la partie de base (11) comporte une troisième portion (50) d'un diamètre inférieur ou égale à celui du piston, et venant au contact du piston lorsque le volume de la chambre de pompage est maximum.

5. Dispositif selon la revendication 4, **caractérisé par le fait que** la dimension axiale des première et troisième portions (50) de la partie de base (11) est inférieure ou égale à deux fois la dimension axiale du piston.

6. Dispositif selon l'une quelconque des revendications précédentes, **caractérisé par le fait que** le piston (20') comporte des moyens d'obturation (26) du passage de sortie (42) propres à obturer ce dernier lorsque l'organe de commande (40') est dans sa position de remplissage, et des moyens d'obturation (80) du passage d'amenée (22).

7. Dispositif selon l'une quelconque des revendications 1 à 5, **caractérisé par le fait que** l'organe de commande (40") comporte des moyens d'obturation (46) du passage d'amenée (22) propres à obturer ce dernier lorsque l'organe de commande est dans sa position de distribution, et des moyens d'obturation (90) du passage de sortie (42).

8. Dispositif selon l'une quelconque des revendications 1 à 5, **caractérisé par le fait que** le piston (20) comporte des moyens d'obturation (26) du passage de sortie (42) propres à obturer ce dernier lorsque l'organe de commande est dans sa position de remplissage et l'organe de commande (40) comporte des moyens d'obturation (46) du passage d'amenée (22) propres à obturer ce dernier lorsque l'organe de commande est dans sa position de distribution.

9. Dispositif selon l'une des revendications précédentes, **caractérisé par le fait que** les moyens d'obturation (46) du passage d'amenée (22) jouent le rôle du premier moyen d'entraînement.

10. Dispositif selon l'une quelconque des revendications précédentes, **caractérisé par le fait que** le piston est constitué par un disque (20) pourvu d'une lumière centrale (21) pour le passage de l'organe de commande (40) et d'orifices de remplissage (22) répartis autour de cette lumière centrale (21), ces orifices constituant le passage d'amenée.

11. Dispositif selon l'une quelconque des revendications précédentes, **caractérisé par le fait que** l'organe de commande (40) comporte une tige de commande (41) s'étendant à une extrémité hors de la partie de base, pourvue à cette extrémité d'un élément de préhension (53) et d'un orifice de sortie (43) du produit.

12. Dispositif selon la revendication précédente, **caractérisé par le fait que** la tige de commande comporte à son extrémité opposée, après traversée du piston, un plateau (46) propre à obturer le passage d'amenée (22) lorsque l'organe de commande est dans sa position de distribution.

13. Dispositif selon la revendication précédente, **caractérisé par le fait que** le plateau (46) comporte des ouvertures (51) favorisant la circulation du produit vers le passage d'amenée (22) du piston.

14. Dispositif selon l'une des trois revendications précédentes, **caractérisé par le fait que** le second moyen d'entraînement (48) est constitué par une butée réalisée sur la tige de commande (41).

15. Dispositif selon l'une des quatre revendications précédentes, **caractérisé par le fait que** le passage de sortie (42) débouche par un orifice radial (45) sur la tige de commande (41) entre les premier (46) et second (48) moyens d'entraînement et **par le fait que** le moyen d'obturation du passage de sortie est constitué par une surface cylindrique (26) de la lumière centrale (21) du piston, ladite surface cylindrique ayant une hauteur inférieure à la distance séparant ledit orifice radial (45) et le premier moyen d'entraînement (46) et une hauteur supérieure à la distance séparant ledit orifice radial (45) et le second moyen d'entraînement (48).

16. Dispositif selon l'une quelconque des revendications précédentes, **caractérisé par le fait que** la partie de base (11) est conformée pour augmenter le frottement du piston (20) sur la partie de base lorsque le volume de la chambre de pompage (30) est minimum ou maximum.

17. Dispositif selon l'une quelconque des revendications précédentes, **caractérisé par le fait que** la partie de base (11) est agencée pour se fixer sur le col (17) du récipient.

18. Récipient équipé d'un dispositif de distribution tel que défini dans l'une quelconque des revendications précédentes.

19. Utilisation d'un récipient tel que précité, tête en bas.

## Claims

1. Dispensing device (10;10';10'') intended to equip a container (12), particularly a container containing a cosmetic product, comprising a base part (11) and an assembly (13;13';13") which can move with respect to this base part and defines therewith a variable-volume pumping chamber (30), the mobile assembly (13;13';13'') comprising a piston (20;20') mobile between two extreme positions and a control member (40;40';40"), this control member being secured to the piston and passing through the stationary part and being equipped with at least one outlet passage (42) allowing the product contained in the pumping chamber to be dispensed, the piston comprising at least one intake passage (22) allowing the pumping chamber to be filled, the control member (40;40';40") being mobile with respect to the piston (20) between a dispensing position and a filling position, the piston comprising shut-off means (26) for shutting off the outlet passage (42), these shut-off means being suitable for shutting off this passage when the control member is in its filling position and/or the control member (40) comprising shut-off means (46) for shutting off the intake passage (22), these shut-off means being suitable for shutting off this passage when the control member is in its dispensing position, the control member comprising a first drive means (46;46') designed so as to collaborate with the piston when the control member is in its dispensing position, so as to drive it along in a direction corresponding to a reduction in the volume of the pumping chamber, the control member comprising a second drive means (48) designed so as to collaborate with the piston when the control member is in its filling position, so as to drive it along in a direction corresponding to an increase in the volume of the pumping chamber, wherein the base part (11) is designed so as to create a friction between the piston (20) and the base part (11) when the volume of the pumping chamber (30) is minimum, and an absence of friction or a smaller friction when the piston is in an intermediate position between its extreme positions.

2. Device according to claim 1, wherein the base part (11) is designed so as to create a friction between the piston (20) and the base part (11) when the volume of the pumping chamber (30) is maximum and an absence of friction between the piston and the base part when the piston is in an intermediate position between its extreme positions.

3. Device according to claims 1 or 2, wherein the base part (11) comprises at least a first portion (50) with an inside diameter smaller than or equal to the outside diameter of the piston (20) and a second portion with a diameter greater than the diameter of the piston, the first portion contacting the piston when the volume of the pumping chamber (30) is minimum.

4. Device according to claim 3, wherein the base part (11) comprises a third portion (50) with a diameter smaller than or equal to the diameter of the piston, and contacting the piston when the volume of the pumping chamber (30) is maximum.

5. Device according to claim 4, wherein the axial dimension of the first and third portions (50) of the base part (11), is smaller than or equal to twice the axial dimension of the piston (20).

6. Device according to any of the preceding claims, wherein the piston (20') comprises means (26) for shutting off the outlet passage (42), these means being capable of shutting off this passage when the control member (40') is in its filling position, and means (80) for shutting off the intake passage (22).

7. Device according to anyone of claims 1 to 5, wherein the control member (40'') comprises means (46) for shutting off the intake passage (22), these means being capable of shutting off this passage when the control member is in its dispensing position, and means (90) for shutting off the outlet passage (42).

8. Device according to anyone of claims 1 to 5, wherein the piston (20) comprises means (26) for shutting off the outlet passage (42), these means being capable of shutting off this passage when the control member is in its filling position, and the control member (40) comprises means (46) for shutting off the intake passage (22), these means being capable of shutting off this passage when the control member is in its dispensing position.

9. Device according to one of the preceding claims, wherein the means (46) for shutting off the intake passage (22) act as the first drive means.

10. Device according to any one of the preceding claims, wherein the piston consists of a disc (20) provided with a central aperture (21) for the passage of the control member (40) and with filling orifices (22) distributed around this central aperture (21), these orifices constituting the intake passage.

11. Device according to any one of the preceding claims, wherein the control member (40) comprises a control rod (41) extending, at one end, out of the base part and equipped, at this end, with an element (53) for grasping and with a product outlet orifice (43).

12. Device according to the preceding claim, wherein the control rod comprises, at its opposite end, having passed through the piston, a flat plate (46) capable of shutting off the intake passage (22) when the control member is in its dispensing position.

13. Device according to the preceding claim, wherein the flat plate (46) has openings (51) encouraging product to flow towards the intake passage (22) in the piston.

14. Device according to one of the three preceding claims, wherein the second drive means (48) consists of a stop formed on the control rod (41).

15. Device according to one of the four preceding claims, wherein the outlet passage (42) opens via a radial orifice (45) onto the control rod (41) between the first (46) and second (48) drive means and in that the means for shutting off the outlet passage consists of a cylindrical surface (26) of the central aperture (21) of the piston, the said cylindrical surface having a height shorter than the distance separating the said radial orifice (45) and the first drive means (46) and a height greater than the distance separating the said radial orifice (45) and the second drive means (48).

16. Device according to any one of the preceding claims, wherein the base part (11) is shaped to increase the friction of the piston (20) on the base part when the volume of the pumping chamber (30) is at its minimum or maximum.

17. Device according to any one of the preceding claims, wherein the base part (11) is designed to be fixed onto the neck (17) of the container.

18. Container equipped with a dispensing device as defined in any one of the preceding claims.

19. Use of a container such as the aforementioned, head down.

## Patentansprüche

1. Abgabevorrichtung (10; 10'; 10"), die dazu bestimmt ist, einen Behälter (12), insbesondere einen ein kosmetisches Produkt enthaltenden Behälter, zu bestücken, umfassend einen Basisteil (11) und eine bezüglich dieses Basisteils bewegliche Einheit (13; 13'; 13"), die mit diesem eine Pumpkammer (30) von veränderlichem Volumen begrenzt, wobei die bewegliche Einheit (13; 13'; 13") einen zwischen zwei Endstellungen beweglichen Kolben (20; 20') und ein Steuerorgan (40; 40'; 40") umfasst, wobei dieses Steuerorgan mit dem Kolben fest verbunden ist und den feststehenden Teil durchquert und mit mindestens einem Austrittsdurchgang (42) versehen ist, der die Abgabe des in der Pumpkammer enthaltenen Produkts gestattet, wobei der Kolben mindestens einen Zufuhrdurchgang (22) umfasst, der die Füllung der Pumpkammer gestattet, wobei das Steuerorgan (40; 40'; 40") bezüglich des Kolbens (20) zwischen einer Abgabestellung und einer Füllstellung beweglich ist, wobei der Kolben Mittel (26) zum Verschließen des Austrittsdurchgangs (42) umfasst, die geeignet sind, diesen zu verschließen, wenn das Steuerorgan in seiner Füllstellung ist, und/oder das Steuerorgan (40) Mittel (46) zum Verschließen des Zufuhrdurchgangs (22) umfasst, die geeignet sind, diesen zu verschließen, wenn das Steuerorgan in seiner Abgabestellung ist, wobei das Steuerorgan ein erstes Antriebsmittel (46; 46') umfasst, das ausgebildet ist, um mit dem Kolben zusammenzuwirken, wenn das Steuerorgan in seiner Abgabestellung ist, um ihn in Bewegung in einer einer Verkleinerung des Volumens der Pumpkammer entsprechenden Richtung mitzunehmen, wobei das Steuerorgan ein zweites Antriebsmittel (48) umfasst, das ausgebildet ist, um mit dem Kolben zusammenzuwirken, wenn das Steuerorgan in seiner Füllstellung ist, um ihn in Bewegung in einer einer Vergrößerung des Volumens der Pumpkammer entsprechenden Richtung mitzunehmen, **dadurch gekennzeichnet, dass** der Basisteil (11) ausgebildet ist, um eine Reibung zwischen dem Kolben und dem Basisteil zu erzeugen, wenn das Volumen der Pumpkammer minimal ist, und ein Fehlen von Reibung oder eine geringere Reibung zu erzeugen, wenn der Kolben in einer Zwischenstellung zwischen seinen Endstellungen ist.

2. Vorrichtung nach Anspruch 1, **dadurch gekennzeichnet, dass** der Basisteil (11) ausgebildet ist, um eine Reibung zwischen dem Kolben (20) und dem Basisteil (11) zu erzeugen, wenn das Volumen der Pumpkammer (30) maximal ist, und ein Fehlen von Reibung zwischen dem Kolben und dem Basisteil zu erzeugen, wenn der Kolben in einer Zwischenstellung zwischen seinen Endstellungen ist.

3. Vorrichtung nach einem der Ansprüche 1 und 2, **dadurch gekennzeichnet, dass** der Basisteil (11) mindestens einen ersten Abschnitt (50) mit einem Innendurchmesser, der kleiner als oder gleich dem Außendurchmesser des Kolbens (20) ist, und einen zweiten Abschnitt mit einem Durchmesser umfasst, der größer als der des Kolbens ist, wobei der erste Abschnitt mit dem Kolben in Kontakt kommt, wenn das Volumen der Pumpkammer (30) minimal ist.

4. Vorrichtung nach Anspruch 3, **dadurch gekennzeichnet, dass** der Basisteil (11) einen dritten Abschnitt (50) umfasst, dessen Durchmesser kleiner als oder gleich dem des Kolbens ist und der mit dem Kolben in Kontakt kommt, wenn das Volumen der Pumpkammer maximal ist.

5. Vorrichtung nach Anspruch 4, **dadurch gekennzeichnet, dass** die axiale Abmessung des ersten und des dritten Abschnitts (50) des Basisteils (11) kleiner als oder gleich dem Zweifachen der axialen Abmessung des Kolbens ist.

6. Vorrichtung nach einem der vorhergehenden Ansprüche, **dadurch gekennzeichnet, dass** der Kolben (20') Mittel (26) zum Verschließen des Austrittsdurchgangs (42), die geeignet sind, diesen zu verschließen, wenn das Steuerorgan (40') in seiner Füllstellung ist, und Mittel (80) zum Verschließen des Zufuhrdurchgangs (22) umfasst.

7. Vorrichtung nach einem der Ansprüche 1 bis 5, **dadurch gekennzeichnet, dass** das Steuerorgan (40") Mittel (46) zum Verschließen des Zufuhrdurchgangs (22), die geeignet sind, diesen zu verschließen, wenn das Steuerorgan in seiner Abgabestellung ist, und Mittel (90) zum Verschließen des Austrittsdurchgangs (42) umfasst.

8. Vorrichtung nach einem der Ansprüche 1 bis 5, **dadurch gekennzeichnet, dass** der Kolben (20) Mittel (26) zum Verschließen des Austrittsdurchgangs (42) umfasst, die geeignet sind, diesen zu verschließen, wenn das Steuerorgan in seiner Füllstellung ist, und das Steuerorgan (40) Mittel (46) zum Verschließen des Zufuhrdurchgangs (22) umfasst, die geeignet sind, diesen zu verschließen, wenn das Steuerorgan in seiner Abgabestellung ist.

9. Vorrichtung nach einem der vorhergehenden Ansprüche, **dadurch gekennzeichnet, dass** die Mittel (46) zum Verschließen des Zufuhrdurchgangs (22) die Rolle des ersten Antriebsmittels spielen.

10. Vorrichtung nach einem der vorhergehenden Ansprüche, **dadurch gekennzeichnet, dass** der Kolben aus einer Scheibe (20) besteht, die mit einer zentralen Öffnung (21) für den Durchgang des Steuerorgans (40) und mit um diese zentrale Öffnung (21) herum verteilten Füllöffnungen (22), die den Zufuhrdurchgang bilden, versehen ist.

11. Vorrichtung nach einem der vorhergehenden Ansprüche, **dadurch gekennzeichnet, dass** das Steuerorgan (40) eine Steuerstange (41) umfasst, die sich an einem Ende außerhalb des Basisteils erstreckt und an diesem Ende mit einem Greifelement (53) und einer Austrittsöffnung (43) für das Produkt versehen ist.

12. Vorrichtung nach dem vorhergehenden Anspruch, **dadurch gekennzeichnet, dass** die Steuerstange an ihrem entgegengesetzten Ende nach Durchquerung des Kolbens eine Platte (46) umfasst, die geeignet ist, den Zufuhrdurchgang (22) zu verschließen, wenn das Steuerorgan in seiner Abgabestellung ist.

13. Vorrichtung nach dem vorhergehenden Anspruch, **dadurch gekennzeichnet, dass** die Platte (46) Öffnungen (51) umfasst, die das Strömen des Produkts auf den Zufuhrdurchgang (22) des Kolbens zu begünstigen.

14. Vorrichtung nach einem der drei vorhergehenden Ansprüche, **dadurch gekennzeichnet, dass** das zweite Antriebsmittel (48) aus einem auf der Steuerstange (41) vorgesehenen Anschlag besteht.

15. Vorrichtung nach einem der vier vorhergehenden Ansprüche, **dadurch gekennzeichnet, dass** der Austrittsdurchgang (42) über eine radiale Öffnung (45) auf der Steuerstange (41) zwischen dem ersten (46) und dem zweiten (48) Antriebsmittel ausmündet und dass das Mittel zum Verschließen des Austrittsdurchgangs aus einer zylindrischen Fläche (26) der zentralen Öffnung (21) des Kolbens besteht, wobei diese zylindrische Fläche eine Höhe besitzt, die kleiner als der Abstand zwischen der radialen Öffnungen (45) und dem ersten Antriebsmittel (46) ist, und eine Höhe, die größer als der Abstand zwischen dieser radialen Öffnung (45) und dem zweiten Antriebsmittel (48) ist.

16. Vorrichtung nach einem der vorhergehenden Ansprüche, **dadurch gekennzeichnet, dass** der Basisteil (11) ausgebildet ist, um die Reibung des Kolbens (20) an dem Basisteil zu erhöhen, wenn das Volumen der Pumpkammer (30) minimal oder maximal ist.

17. Vorrichtung nach einem der vorhergehenden Ansprüche, **dadurch gekennzeichnet, dass** der Basisteil (11) ausgebildet ist, um an dem Hals (17) des Behälters befestigt zu werden.

18. Behälter, der mit einer Abgabevorrichtung ausgerüstet ist, wie sie in einem der vorhergehenden Ansprüche definiert ist.

19. Verwendung eines Behälters der oben genannten Art mit dem Kopf nach unten.
